# EUROPEAN PATENT APPLICATION

(11) **EP 4 604 288 A1**
(43) Date of publication of application: **20.08.2025**
(21) Application number: 23877340.2
(22) Date of filing: 12.10.2023
(51) Int. Cl.: H01M 50/195, H01M 10/052, H01M 10/054, H01M 10/0562, H01M 10/058, H01M 50/184, H01M 50/191, H01M 50/193, H01M 50/198, H01M 50/586, H01M 50/591

(54) **ALL-SOLID-STATE BATTERY**

(30) Priority: 12.10.2022 JP 2022164369
(71) Applicant: Dai Nippon Printing Co., Ltd., Tokyo 162-8001 (JP)
(72) Inventor: SASAKI, Miho, Tokyo 162-8001 (JP); NAKAMURA, Chihiro, Tokyo 162-8001 (JP); OKANO, Ai, Tokyo 162-8001 (JP); TAKEUCHI, Naoya, Tokyo 162-8001 (JP)
(74) Representative: Müller-Boré & Partner Patentanwälte PartG mbB
(86) International application number: PCT/JP2023/037095
(87) International publication number: WO 2024/080339

(57) **Abstract**

This all-solid-state battery is provided with a solid electrolyte and a resin film for all-solid-state batteries, the resin film being disposed so as to be in contact with at least a part of the solid electrolyte; and the resin film for all-solid-state batteries contains at least one of a water absorbent and a gas absorbent.

## Description

### Technical Field

The present invention relates to an all-solid-state battery.

### Background Art

PTL 1 discloses an example of an all-solid-state battery. The all-solid-state battery includes an electrical storage element including a positive electrode layer, a negative electrode layer, and a solid electrolyte layer disposed between the positive electrode layer and the negative electrode layer, and an electrical insulating frame disposed on the periphery of the electrical storage element. The electrical storage element and the electrical insulating frame are housed in a battery case.

### Citation List

### Patent Literature

PTL 1: Japanese Patent Laid-open Publication No. 2009-193728

### Summary of Invention

### Technical Problem

In the all-solid-state battery, water vapor as an example of gas may enter from the outside of the battery case. Contact between moisture contained in water vapor and a solid electrolyte may generate a gas such as hydrogen sulfide depending on the type of a solid electrolyte which is used for the solid electrolyte layer. Such a problem arises not only in the case where moisture comes into contact with the solid electrolyte layer, but also in the case where, for example, when the positive electrode layer and the negative electrode layer contain a solid electrolyte, moisture comes into contact with the solid electrolyte contained in the positive electrode layer and the negative electrode layer.

An object of the present invention is to provide an all-solid-state battery which can exhibit at least one of the resistance to contact between an electrical storage element and moisture and the ability to absorb a gas generated from the electrical storage element.

### Solution to Problem

An all-solid-state battery according to a first aspect of the present invention includes an electrical storage element including a solid electrolyte, and a resin film for all-solid-state batteries which is disposed so as to be in contact with at least a part of the solid electrolyte, in which the resin film for all-solid-state batteries contains at least one of a water absorbent and a gas absorbent.

An all-solid-state battery according to a second aspect of the present invention is the all-solid-state battery according to the first aspect, including a solid electrolyte layer including the solid electrolyte, in which the resin film for all-solid-state batteries is disposed so as to be in contact with at least the solid electrolyte layer.

An all-solid-state battery according to a third aspect of the present invention is the all-solid-state battery according to the first or second aspect, including a positive electrode layer including the solid electrolyte, in which the resin film for all-solid-state batteries is disposed so as to be in contact with at least the positive electrolyte layer.

An all-solid-state battery according to a fourth aspect of the present invention is the all-solid-state battery according to any one of the first to third aspects, including a negative electrode layer including the solid electrolyte, in which the resin film for all-solid-state batteries is disposed so as to be in contact with at least the negative electrolyte layer.

An all-solid-state battery according to a fifth aspect of the present invention is the all-solid-state battery according to any one of the first to fourth aspects, in which the resin film for all-solid-state batteries is in a shape of a frame surrounding the solid electrolyte.

An all-solid-state battery according to a sixth aspect of the present invention is the all-solid-state battery according to any one of the first to fifth aspects, including an outer packaging that seals the electrical storage element, in which the outer packaging includes a film-shaped exterior member including a barrier layer, and the resin film for all-solid-state batteries is disposed on at least a part of a region inside the barrier layer.

An all-solid-state battery according to a seventh aspect of the present invention is the all-solid-state battery according to any one of the first to sixth aspects, in which the gas absorbent includes at least one selected from the group consisting of a chemical sulfur-based gas absorbent and a physical sulfur-based gas absorbent.

An all-solid-state battery according to an eighth aspect of the present invention is the all-solid-state battery according to the seventh aspect, in which the chemical sulfur-based gas absorbent is a metal oxide, or an inorganic substance carrying or containing a metal or metal ions.

### Advantageous Effects of Invention

The all-solid-state battery according to the present invention can exhibit at least one of the resistance to contact between an electrical storage element and moisture and the ability to absorb a gas generated from the electrical storage element.

### Brief Description of Drawings

[Fig. 1] Fig. 1 is a plan view of an all-solid-state battery of an embodiment.
[Fig. 2] Fig. 2 is a sectional view showing an example of a layer configuration of an exterior member of Fig. 1.
[Fig. 3] Fig. 3 is a sectional view taken along line D3-D3 in Fig. 1.
[Fig. 4] Fig. 4 is a plan view of the resin film for all-solid-state batteries in Fig. 3.
[Fig. 5] Fig. 5 is a sectional view showing another example of disposition of the resin film for all-solid-state batteries in Fig. 3.
[Fig. 6] Fig. 6 is a sectional view showing still another example of disposition of the resin film for all-solid-state batteries in Fig. 3.
[Fig. 7] Fig. 7 is a sectional view showing still another example of disposition of the resin film for all-solid-state batteries in Fig. 3.
[Fig. 8] Fig. 8 is a sectional view showing still another example of disposition of the resin film for all-solid-state batteries in Fig. 3.
[Fig. 9] Fig. 9 is a sectional view showing still another example of disposition of the resin film for all-solid-state batteries in Fig. 3.
[Fig. 10] Fig. 10 is a sectional view showing still another example of disposition of the resin film for all-solid-state batteries in Fig. 3.
[Fig. 11] Fig. 11 is a sectional view showing an example of a layer configuration of the resin film for all-solid-state batteries in Fig. 3.
[Fig. 12] Fig. 12 is a sectional view showing another example of a layer configuration of the resin film for all-solid-state batteries in Fig. 3.
[Fig. 13] Fig. 13 is a sectional view of an all-solid-state battery of a modification.
[Fig. 14] Fig. 14 is a sectional view of an all-solid-state battery of another modification.
[Fig. 15] Fig. 15 is a sectional view of an all-solid-state battery of still another modification.

### Description of Embodiments

Hereinafter, an all-solid-state battery according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### <1. Overall configuration of all-solid-state battery>

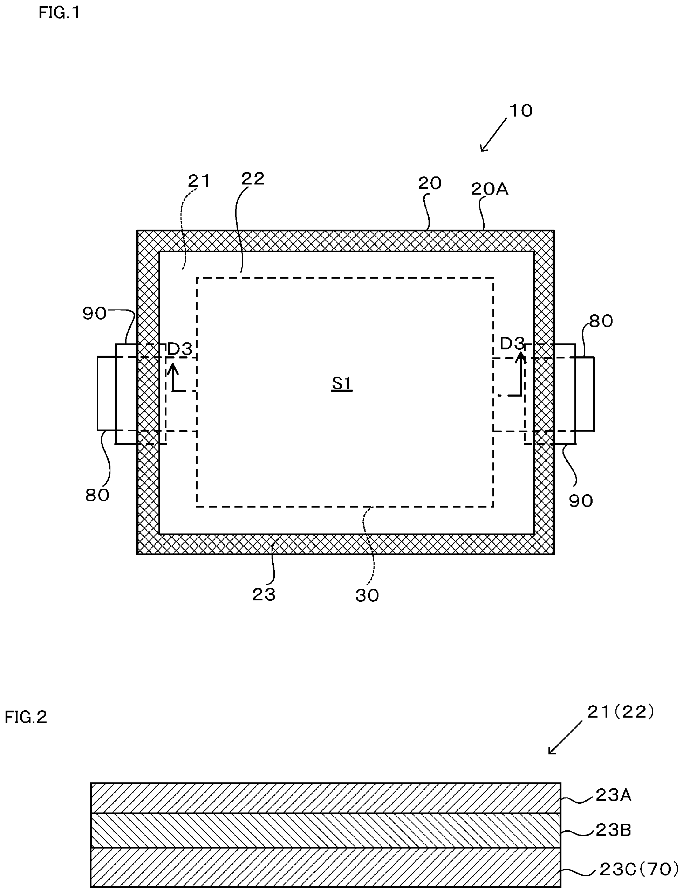

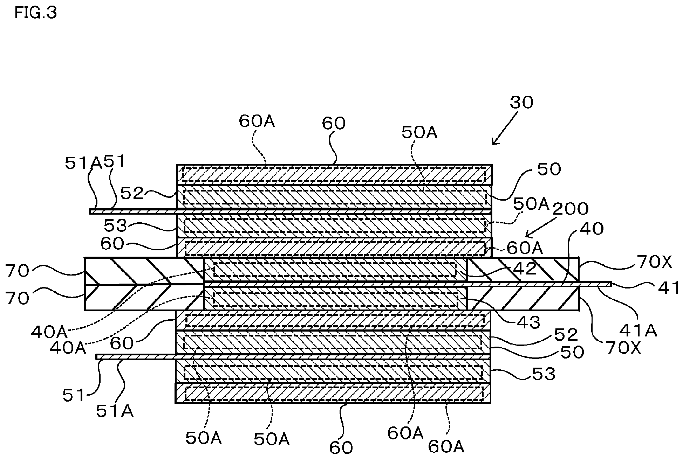

Fig. 1 is a plan view of an all-solid-state battery 10 of the present embodiment. Fig. 2 is a sectional view showing an example of a layer configuration of the exterior members 21 and 22. Fig. 3 is a sectional view taken along line D2-D2 in Fig. 1. Hereinafter, unless otherwise specified, the longitudinal direction and the horizontal direction in Fig. 1 are referred to as "longitudinal" and "horizontal", respectively, and the vertical direction in Fig. 3 is referred to as "vertical", for convenience of explanation. However, the direction of the all-solid-state battery 10 during use is not limited thereto. **In** the drawings that are used in connection with the following description, a characteristic portion may be enlarged for the purpose of illustration, and dimensional ratios of the components, and the like are not limited to those shown in the drawings.

The all-solid-state battery 10 is, for example, an all-solid-state lithium ion secondary battery, an all-solid-state sodium ion secondary battery, an all-solid-state magnesium ion secondary battery, or the like. **In** the present embodiment, the all-solid-state battery 10 is an all-solid-state lithium ion secondary battery. The all-solid-state battery 10 is used for, for example, an electrically driven vehicle such as an electric vehicle or a hybrid vehicle in which a large number of all-solid-state batteries 10 are connected in series and used at a high voltage. The all-solid-state battery 10 includes an outer packaging 20, an electrical storage element 30, an electrode terminal 80, and an adhesion film 90 for terminal.

The outer packaging 20 includes an internal space S1 and a peripheral edge seal portion 23. The electrical storage element 30 is housed in the internal space S1 of the outer packaging 20. One end of the electrode terminal 80 is joined to the electrical storage element 30, and the other end protrudes outward from the peripheral edge seal portion 23 of the outer packaging 20. A part of the electrode terminal 80 between one end and the other end thereof is sealed to the peripheral edge seal portion 23 with the adhesion film 90 for terminal.

The outer packaging 20 includes a case 20A. The case 20A includes packaging exterior members 21 and 22. At the outer peripheral portion of the case 20A in plan view, the exterior members 21 and 22 are sealed to each other by heat sealing to form the peripheral edge seal portion 23. An internal space S1 of the case 20A, which is cut off from the external space, is formed by the peripheral edge seal portion 23. The peripheral edge seal portion 23 defines a peripheral edge of the internal space S1 of the case 20A. The form of the heat sealing mentioned here is assumed to be sealing by heating from a heat source, ultrasonic sealing or the like. In any case, the peripheral edge seal portion 23 means a portion in which the exterior members 21 and 22 are sealed to each other to be integrated. In a portion of the peripheral edge seal portion 23 where the electrode terminal 80 and adhesion film 90 for terminal are sandwiched, the exterior member 22, the electrode terminal 80, a pair of adhesion films 90 for terminal, and the exterior member 21 are integrated. In a portion of the peripheral edge seal portion 23 where only a pair of adhesion films 90 for terminal are sandwiched, the exterior member 22, a pair of adhesion films 90 for terminal, and the exterior member 21 are integrated.

The exterior members 21 and 22 include, for example, a resin molded article or a film. The resin molded article mentioned here can be manufactured by a method such as injection molding, compressed-air molding, vacuum molding or blow molding, where in-mold molding may be performed for imparting a design property, and functionality. The type of the resin may be polyolefin, polyester, nylon, ABS, or the like. The film mentioned here is, for example, a resin film that can be manufactured by a method such as an inflation method or a T-die method, or a film obtained by laminating such a resin film on a metal foil. The film mentioned here may be a stretched film, and may be a single layer film or multiple layer film. The multiple layer film mentioned here may be manufactured by a coating method, may be obtained by bonding a plurality of films with an adhesive or the like, or may be manufactured by a multilayer extrusion method.

The exterior members 21 and 22 can be formed in various ways as described above, and include a laminate film as shown in Fig. 2 in the present embodiment. The laminate film can be a laminate obtained by laminating a base material layer 23A, a barrier layer 23B and a heat-sealable resin layer 23C. The base material layer 23A functions as a base material of the exterior members 21 and 22, and typically forms an outer layer side of the case 20A. A resin layer made of polyester such as polyethylene terephthalate or polybutylene terephthalate, or polyamide such as nylon, which has insulation quality, may be formed as a single layer or a multiple layer having two or more layers. The barrier layer 23B has functions of improving the strength of the exterior members 21 and 22 and preventing ingress of moisture, among others, into the electrical storage element 30. The barrier layer is typically a metal layer composed of an aluminum alloy foil, a stainless steel foil, a titanium steel foil, a steel sheet foil or the like. The heat-sealable resin layer 23C is typically composed of a heat-sealable resin such as polyolefin such as polypropylene, or polyester such as polyethylene terephthalate or polybutylene terephthalate, and forms the innermost layer of the case 20A. The shape of the case 20A is not particularly limited, and can be, for example, a bag shape (pouch shape). The bag shape mentioned here may be of three-way seal type, four-way seal type, pillow type, gusset type or the like. The case 20A may include the exterior members 21 and 22, or may be, for example, a metal can.

The electrode terminal 80 is a metal terminal for use in input and output of electrical power in the all-solid-state battery 10. The electrode terminals 80 are disposed, respectively, at the end parts of the peripheral edge seal portion 23 of the case 20A in a horizontal direction, with one electrode terminal forming a terminal on the positive electrode side and the other forming a terminal on the negative electrode side. One end part of each electrode terminal 80 in the horizontal direction is electrically connected to the positive electrode layer 40 or the negative electrode layer 50 (see Fig. 3) of the electrical storage element 30 in the internal space S1 of the case 20A, and the other end part protrudes outward from the peripheral edge seal portion 23. The locations of attachment of the two electrode terminals 80 forming the terminals of the positive electrode layer 40 and the negative electrode layer 50 are not particularly limited, and for example, the electrode terminals may be disposed on the same side of the peripheral edge seal portion 23.

The metal material forming the electrode terminal 80 is, for example, aluminum, nickel, or copper. When the all-solid-state battery 10 is a lithium ion secondary battery, the electrode terminal 80 connected to the positive electrode layer 40 is typically composed of aluminum or the like, and the electrode terminal 80 connected to the negative electrode layer 50 is typically composed of copper, nickel or the like.

The electrode terminal 80 on the left side is sandwiched between the exterior members 21 and 22 with the adhesion film 90 for terminal at the left end part of the peripheral edge seal portion 23. The electrode terminal 80 on the right side is sandwiched between the exterior members 21 and 22 with the adhesion film 90 for terminal at the right end part of the peripheral edge seal portion 23.

The adhesion film 90 for terminal is a so-called adhesive film, and is configured to be bonded to both the exterior members 21 and 22 and the electrode terminal 80 (metal). By interposing the adhesion film 90 for terminal, the electrode terminal 80 and the innermost layer (heat-sealable resin layer) of the exterior members 21 and 22 can be fixed even if the former and the latter are made of different materials. The adhesion film 90 for terminal is sealed and fixed to the electrode terminal 80 to integrate the adhesion film 90 for terminal and the electrode terminal 80 in advance. The electrode terminal 80 to which the adhesion film 90 for terminal is fixed is sandwiched between the exterior members 21 and 22, and sealed to perform integration thereof.

### <2. Electrical storage element>

### <2-1. Overall configuration>

As shown in Fig. 3, the electrical storage element 30 includes the positive electrode layer 40, the negative electrode layer 50, a solid electrolyte layer 60, and a resin film 70 for all-solid-state batteries (hereinafter, referred to as a "film 70"). The positive electrode layers 40 and the negative electrode layers 50 are alternately laminated in a vertical direction with the solid electrolyte layer 60 interposed between the positive electrode layer 40 and the negative electrode layer 50. The all-solid-state battery 10 is charged/discharged by exchange of lithium ions through the solid electrolyte layer 60 between the positive electrode layer 40 and the negative electrode layer 50. The number of the positive electrode layers 40 and the negative electrode layers 50 in the electrical storage element 30 can be arbitrarily selected. In the present embodiment, the electrical storage element 30 includes one positive electrode layer 40 and two negative electrode layers 50. The electrical storage element 30 may include two or more positive electrode layers 40, or may include three or more negative electrode layers 50.

### <2-2. Positive electrode layer>

The positive electrode layer 40 includes a positive electrode current collector 41, and positive active material layers 42 and 43 formed on a part of both surfaces of the positive electrode current collector 41. The positive electrode current collector 41 is preferably composed of at least a material having high conductivity. The highly conductive substance is, for example, a metal or an alloy including at least one of metal elements of silver, palladium, gold, platinum, aluminum, copper, chromium, and nickel. The material for forming the positive electrode current collector 41 may be a non-metal such as carbon. The shape of the positive electrode current collector 41 is, for example, a foil shape, a plate shape, a mesh shape, a nonwoven fabric shape, or a foam shape. In the present embodiment, the shape of the positive electrode current collector 41 is a rectangle.

The positive active material layers 42 and 43 contain a positive active material capable of exchanging lithium ions and electrons. The positive active material is not particularly limited as long as it is a material that can reversibly release and occlude lithium ions and can transport electrons. A known positive active material applicable to a positive electrode layer of an all-solid-state lithium ion secondary battery can be used. The positive active material layers 42 and 43 preferably include a solid electrolyte 40A that exchanges lithium ions with the positive active material. The solid electrolyte 40A is not particularly limited as long as it has lithium ion conductivity. A material that is generally used for all-solid-state lithium ion secondary batteries can be used. It is preferable that the concentration of the solid electrolyte 40A contained in the positive active material layer 42 gradually increases as the distance from the solid electrolyte layer 60 laminated on the positive electrode current collector 41 decreases. It is preferable that the concentration of the solid electrolyte 40A contained in the positive active material layer 43 gradually increases as the distance from the solid electrolyte layer 60 laminated under the positive electrode current collector 41 decreases.

In the present embodiment, the positive active material layers 42 and 43 are formed on both surfaces of the positive electrode current collector 41, but the present invention is not limited thereto, and one of the positive active material layers 42 and 43 may be formed on one surface of the positive electrode current collector 41.

A terminal connecting portion 41A on which the positive active material layers 42 and 43 are not formed are formed on a part of both surfaces of the positive electrode current collector 41. The tip end of the terminal connecting portion 41A is located on the right side with respect to the end part on the right side of the negative electrode layer 50, and exposed from a tip end part 70X of the film 70. A portion of the terminal connecting portion 41A which is exposed to the film 70 is electrically connected to, for example, the electrode terminal 80 on the right side (see Fig. 1).

### <2-3. Negative electrode layer>

The negative electrode layer 50 includes a negative electrode current collector 51, and negative active material layers 52 and 53 formed on both surfaces of the negative electrode current collector 51. As the material for forming the negative electrode current collector 51, materials exemplified as the material for forming the positive electrode current collector 41 can be used. As the shape of the negative electrode current collector 51, shapes exemplified as the shape of the positive electrode current collector 41 can be adopted. In the present embodiment, the shape of the negative electrode current collector 51 is a rectangular foil shape. It is preferable that the concentration of the solid electrolyte 50A contained in the negative active material layer 52 gradually increases as the distance from the solid electrolyte layer 60 laminated on the negative active material layer 52 decreases. It is preferable that the concentration of the solid electrolyte 50A contained in the negative active material layer 53 gradually increases as the distance from the solid electrolyte layer 60 laminated under the negative active material layer 52 decreases.

The negative active material layers 52 and 53 contain a negative active material capable of exchanging lithium ions and electrons. The negative active material is not particularly limited as long as it is a material that can reversibly release and occlude lithium ions and can transport electrons. A known negative active material applicable to a negative electrode layer of an all-solid-state lithium ion secondary battery can be used.

In the present embodiment, the negative active material layers 52 and 53 are formed on both surfaces of the negative electrode current collector 51, but the present invention is not limited thereto, and one of the negative active material layers 52 and 53 may be formed on one surface of the negative electrode current collector 51. For example, when the negative electrode layer 50 is formed as the lowermost layer of the electrical storage element 30 in the lamination direction (vertical direction), the opposed positive electrode layer 40 is not present under the negative electrode layer 50 located at the lowermost layer. Therefore, in the negative electrode layer 50 located at the lowermost layer, the negative active material layer 52 may be formed only on one surface on the upper side in the lamination direction.

A terminal connecting portion 51A on which the negative active material layers 52 and 53 are not formed are formed on a part of both surfaces of the negative electrode current collector 51. The tip end of the terminal connecting portion 51A is located on the left side with respect to the end part on the left side of the positive electrode layer 40. The terminal connecting portion 51A is electrically connected to, for example, the electrode terminal 80 on the left side (see Fig. 1).

### <2-4. Solid electrolyte layer>

The solid electrolyte layer 60 is composed of a material including the solid electrolyte 60A. The solid electrolyte is not particularly limited as long as it has lithium ion conductivity. A material that is generally used for all-solid-state lithium ion secondary batteries can be used.

### <2-5. Overall outline of resin film for all-solid-state batteries>

Since ingress of moisture into the all-solid-state battery 10 (electrical storage element 30) deteriorates the performance of the all-solid-state battery 10, the exterior members 21 and 21 are provided with the barrier layer 23B (see Fig. 2). By providing the barrier layer 23B, ingress of moisture from the outside of the barrier layer 23B can be suppressed. However, if the heat-sealable resin layers 23C of the exterior members 21 and 22 are heat-sealed to seal the electrical storage element 30, the end surface of the heat-sealable resin layer 23C is exposed to the outside. Therefore, moisture may enter from the end surface of the heat-sealable resin layer 23C. If the heat-sealable resin layers 23C of the exterior members 21 and 22 absorb water before the electrical storage element 30 is sealed with the exterior members 21 and 22, moisture in the heat-sealable resin layer 23C may enter the electrical storage element 30 after the electrical storage element 30 is sealed. Contact between moisture and solid electrolyte 40A, 50A or 60A contained in an element forming the all-solid-state battery 10 may generate a gas such as hydrogen sulfide depending on the type of the solid electrolyte 40A, 50A or 60A. Therefore, the internal pressure of the outer packaging 20 may increase. The all-solid-state battery 10 of the present embodiment includes the film 70 so that moisture entering the outer packaging 20, moisture present in the outer packaging 20, and a gas generated from the all-solid-state battery 10 can be absorbed.

The film 70 of the present embodiment includes a first mode and a second mode. **In** the first mode, the film 70 contains at least a water absorbent so that even if water vapor enters the outer packaging 20, or moisture is present inside the outer packaging 20, the water vapor (moisture) and the solid electrolyte 40A, 50A or 60A contained in an element constituting the all-solid-state battery 10 do not come into contact with each other. **In** the second mode of the present embodiment, the film 70 contains at least a gas absorbent so that a gas such as hydrogen sulfide generated when the solid electrolyte 40A, 50A or 60A and water vapor come into contact with each other can be absorbed.

The film 70 is disposed so as to be in contact with at least a part of the solid electrolyte 40A of the positive electrode layer 40, the solid electrolyte 50A of the negative electrode layer 50 and the solid electrolyte 60A of the solid electrolyte layer 60. A position where the film 70 is disposed can be arbitrarily selected as long as it is a position where the film 70 is in contact with at least a part of the solid electrolytes 40A, 50A and 60A. Hereinafter, a specific example of the position where the film 70 is disposed will be described.

If the shapes and areas of the positive electrode layer 40 and the negative electrode layer 50 are substantially the same, the outer peripheral end part of the positive electrode layer 40 and the outer peripheral end part of the negative electrode layer 50 may come into contact with each other, resulting in occurrence of a short circuit, in the step of hot-pressing the electrical storage element 30. Therefore, it is preferable that one of the positive electrode layer 40 and the negative electrode layer 50 is smaller in area than the other. The area of the positive electrode layer 40 is the area of the positive active material layers 42 and 43 in plan view. The area of the negative electrode layer 50 is the area of the negative active material layers 52 and 53 in plan view. In the present embodiment, the area of the positive active material layers 42 and 43 are smaller than the area of the negative active material layers 52 and 53 in plan view. The shapes and areas of the positive electrode layer 40 and the negative electrode layer 50 may differ simply by an error during manufacturing.

As shown in Fig. 3, when one of the positive electrode layer 40 and the negative electrode layer 50 is smaller in area than the other, a level difference 200 is formed between the outer peripheral end part of the positive electrode layer 40 and the outer peripheral end part of the negative electrode layer 50. Therefore, at the level difference 200, for example, the outer peripheral end part of the negative electrode layer 50 may break when the electrical storage element 30 is hot-pressed during manufacturing of the all-solid-state battery 10. In the electrical storage element 30 according to the present embodiment, the film 70 is disposed so as to fill the level difference 200 for suppressing the occurrence of such a situation.

In the present embodiment, the electrical storage element 30 includes two films 70. The electrical storage element 30 may include one film 70, or three or more films 70. In the present embodiment, the film 70 is disposed along the outer contour of the positive electrode layer 40 such that the film 70 is in contact with the positive electrode layer 40 and the solid electrolyte layer 60. The film 70 is only required to be disposed along at least a part of the outer contour of the positive electrode layer 40. The tip end part 70X of the film 70 is located outside the outer edge of the negative electrode layer 50. In the present embodiment, the film 70 is disposed along the entire circumference of the outer contour of the positive electrode layer 40. Therefore, the film 70 is disposed at a location corresponding to a wider region of the outer peripheral end part of the negative electrode layer 50, so that the negative electrode layer 50 is unlikely to break during the manufacture of the electrical storage element 30.

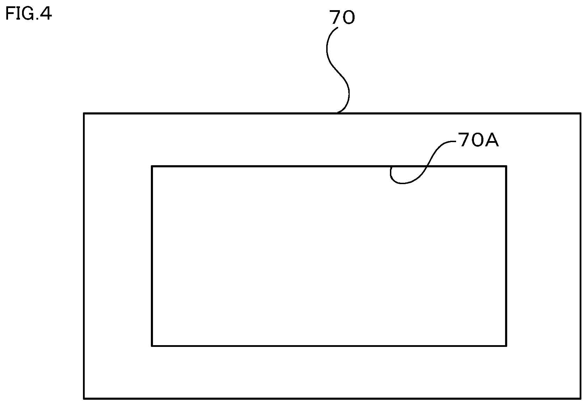

Fig. 4 is a plan view of the film 70. The shape of the film 70 can be arbitrarily selected. In the present embodiment, the shape of the film 70 is a frame shape. The shape of the outer contour of the film 70 is a rectangle. The shape of the outer contour of the film 70 may be a square, or a polygon having five or more angles. A hole 70A bored through the film 70 is formed substantially at the center of the film 70. The shape of the inner contour of the hole 70A is substantially the same as the shape of the outer counter of the positive active material layers 42 and 43. The area of the hole 70A is slightly larger than the area of the positive active material layers 42 and 43.

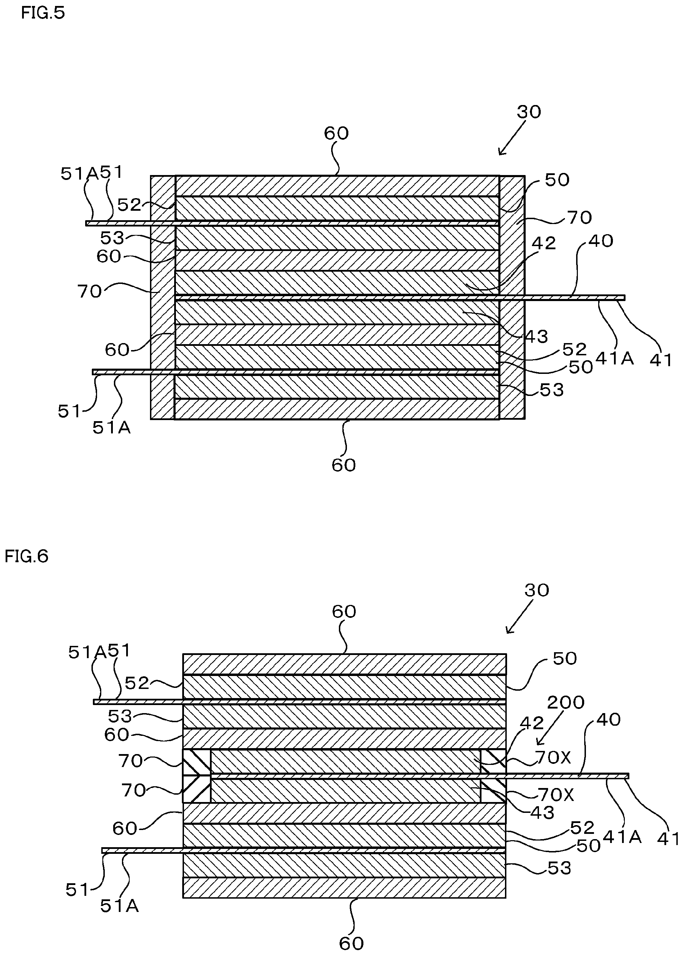

Fig. 5 is a sectional view showing another example of disposition of the film 70. **In** the example shown in Fig. 5, the areas of the positive electrode layer 40, the negative electrode layer 50 and the solid electrolyte layer 60 are substantially equal. Therefore, the lateral surface of the electrical storage element 30 is substantially flat. **In** the example shown in Fig. 5, the film 70 is disposed so as to cover substantially the entire lateral surface of the electrical storage element 30 such that the film 70 is in contact with the positive electrode layer 40, the negative electrode layer 50 and the solid electrolyte layer 60. **In** the example shown in Fig. 5, the shape of the film 70 is not required to be a frame shape, and may be a sheet shape having no hole. **In** Fig. 5, the solid electrolytes 40A, 50A and 60A are not shown.

Fig. 6 is a sectional view showing still another example of disposition of the film 70. **In** the example shown in Fig. 6, the area of the positive electrode layer 40 is smaller than the area of the negative electrode layer 50. **In** the example shown in Fig. 6, the film 70 is disposed along the outer contour of the positive electrode layer 40. The tip end part 70X of the film 70 is substantially identical in location to the outer edge of the negative electrode layer 50. The tip end part 70X of the film 70 may be located inside the outer edge of the negative electrode layer 50. **In** Fig. 6, the solid electrolytes 40A, 50A and 60A are not shown.

The film 70 may be disposed at an arbitrary location inside the barrier layer 23B of the exterior members 21 and 22 as long as it is a location where the film 70 is in contact with at least a part of the solid electrolytes 40A, 50A and 60A contained in an element forming the electrical storage element 30. In the present embodiment, the term "inside the barrier layer 23B" means a side opposite to the base material layer 23A with respect to the barrier layer 23B in a direction along which the layers 23A to 23C of the exterior members 21 and 22 are laminated.

The film 70 can also be used as the heat-sealable resin layer 23C of the exterior members 21 and 22 as shown in Fig. 2. The film 70 may be used as an adhesive layer between the barrier layer 23B and the heat-sealable resin layer 23C. When the film 70 is used as an adhesive layer between the barrier layer 23B and the heat-sealable resin layer 23C, a part of the film 70 is exposed from between the barrier layer 23B and the heat-sealable resin layer 23C so that the film 70 can come into contact with the electrical storage element 30. The film 70 can also be used as an adhesion film interposed between the heat-sealable resin layers 23C facing each other at a location where the heat-sealable resin layers 23C of the exterior members 21 and 22 are heat-sealed. When the film 70 is used as an adhesion film, a gas is released to the outside by delaminating of a portion of the heat-sealable resin layer 23C where the film 70 is interposed if the internal pressure of the outer packaging 20 is increased by generation of the gas from the electrical storage element 30.

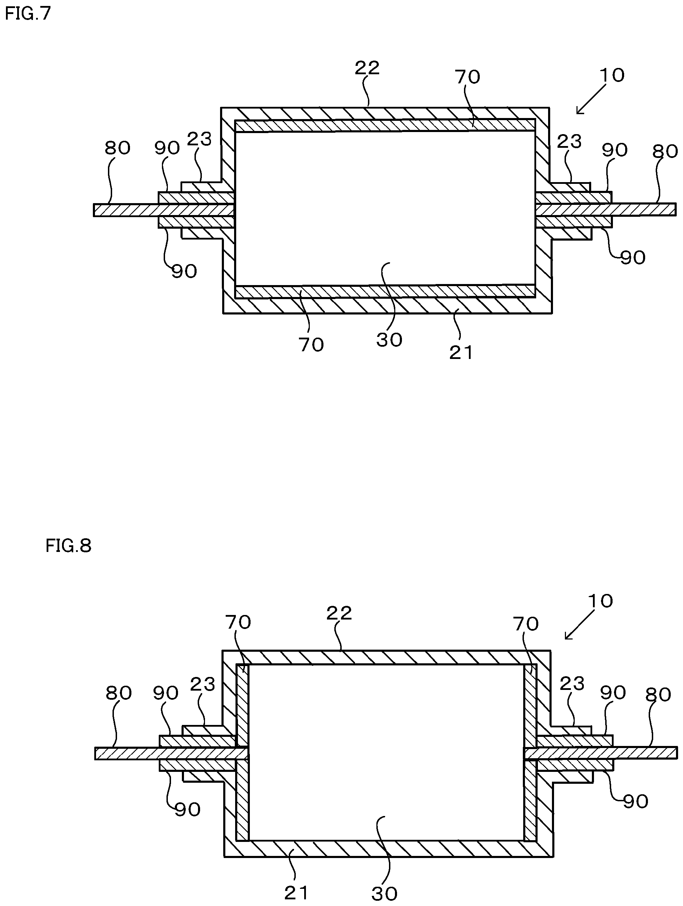

In the example shown in Fig. 7, the film 70 is disposed between the exterior members 21 and 22 and the electrical storage element 30 so as to cover substantially the entire upper surface and lower surface of the electrical storage element 30. The film 70 and the inner surfaces (heat-sealable resin layers 23C) of the exterior members 21 and 22 may, or are not required to, be joined.

In the example shown in Fig. 8, the film 70 is disposed between the exterior members 21 and 22 and the electrical storage element 30 so as to cover substantially the entire lateral surface of the electrical storage element 30. The film 70 and the inner surfaces (heat-sealable resin layers 23C) of the exterior members 21 and 22 may, or are not required to, be joined.

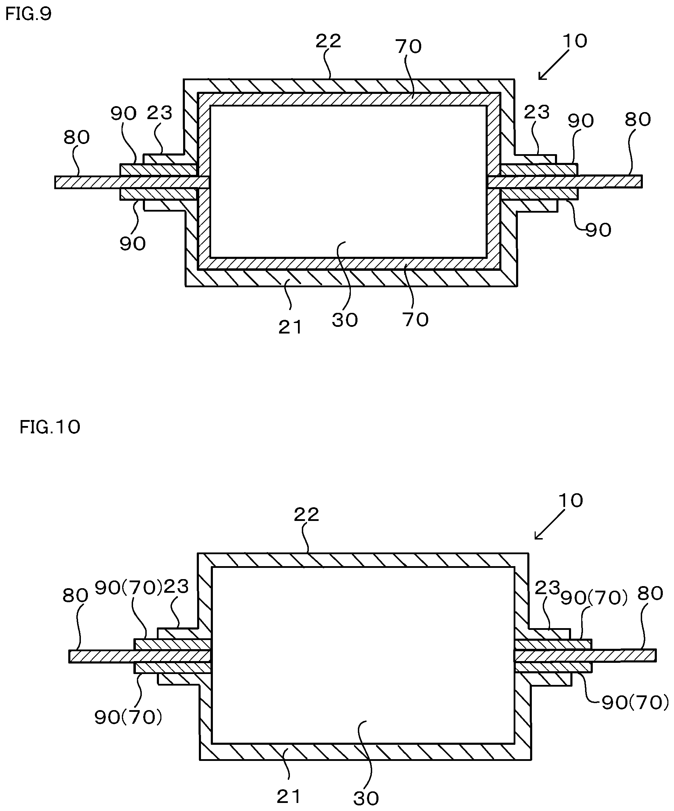

In the example shown in Fig. 9, the film 70 is disposed between the exterior members 21 and 22 and the electrical storage element 30 so as to cover substantially the entire electrical storage element 30. The film 70 and the inner surfaces (heat-sealable resin layers 23C) of the exterior members 21 and 22 may, or are not required to, be joined.

In the example shown in Fig. 10, the film 70 is used as the adhesion film 90 for terminal. Since the end surface of the adhesion film 90 for terminal is exposed to the outside, moisture may enter from the end surface of the adhesion film 90 for terminal. If the adhesion film 90 for terminal absorbs water before the adhesion film 90 for terminal is interposed between the electrode terminal 80 and the exterior members 21 and 22, moisture in the adhesion film 90 for terminal may enter the electrical storage element 30 after the adhesion film 90 for terminal is interposed between the electrode terminal 80 and the exterior members 21 and 22.

By using the film 70 of the first mode as the adhesion film 90 for terminal, ingress of moisture from the end part of the adhesion film 90 for terminal and ingress of moisture contained in the adhesion film 90 for terminal into the electrical storage element 30 can be effectively suppressed. That is, in the all-solid-state battery 10 including the film 70 of the first mode, moisture can be inhibited from reaching the electrical storage element 30 with the film 70 absorbing and holding moisture entering from the adhesion film 90 for terminal because the film 70 contains a water absorbent. **In** addition, for example, when the electrical storage element 30 is an all-solid-state battery, a gas generated by contact between a solid electrolyte layer included as an element forming the all-solid-state battery and moisture, such as hydrogen sulfide, can be sufficiently absorbed by using the film 70 of the second mode as the adhesion film 90 for terminal. That is, in the all-solid-state battery 10 including the film 70 of the second mode, a gas generated from the electrical storage element 30, such as hydrogen sulfide, can be absorbed by the film 70 because the film 70 contains a gas absorbent. Therefore, a gas such as hydrogen sulfide is hardly released to the outside.

### <2-6. Specific configuration of resin film for all-solid-state batteries>

**In** the first mode of the film 70, the moisture to be absorbed is moisture from gas and/or liquid. As described later, the resin film for all-solid-state batteries according to the first mode of the present embodiment may also target a sulfur-based gas for absorption if necessary. Examples of the sulfur-based gas include hydrogen sulfide, dimethyl sulfide, methyl mercaptan, and sulfur oxide represented by SOx. The moisture to be absorbed generates various kinds of outgas when absorbed by, for example, a solid electrolyte-type lithium ion battery, and the sulfur-based gas is a component of outgas (for example, generated when the all-solid-state battery 10 is an all-solid-state battery using a sulfide-based inorganic solid electrolyte, or a lithium secondary battery in which lithium-sulfur is used for the positive electrode).

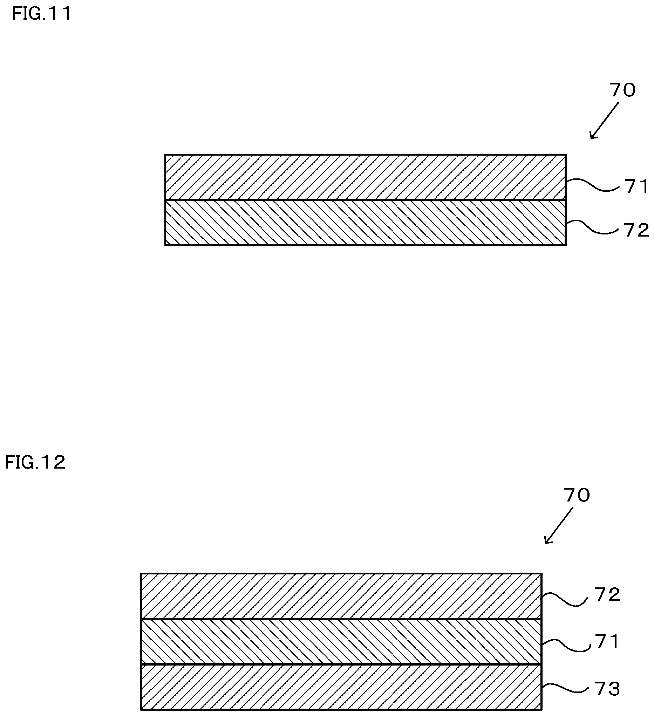

The film 70 according to the present embodiment may be a single layer as shown in, for example, Fig. 3, or may have two or more layers as shown in, for example, Figs. 11 and 12. Fig. 11 shows the film 70 including a laminate in which a first layer 71 and a second layer 72 are laminated. Fig. 12 shows the film 70 including a laminate in which the second layer 72, the first layer 71 and a third layer 73 are laminated in the stated order.

In the first mode, when the film 70 has two or more layers, it is only necessary that at least one of the two or more layers contain a water absorbent. In the present embodiment, a layer containing a water absorbent is sometimes referred to as a "water absorbing layer". Specific examples of the laminated configuration of the film 70 according to the first mode include a laminated configuration in which the first layer 71 on the side of exterior members 21 and 22 is a water absorbing layer and the second layer 72 on the electrical storage element 30 side is a layer free of a water absorbent in, for example, Fig. 11. In addition, examples of the laminated configuration of the film 70 include a laminated configuration in which the first layer 71 located in the middle is a water absorbing layer and the second layer 72 on the electrical storage element 30 side and the third layer 73 on the side of exterior members 21 and 22 are layers free of a water absorbent; and a laminated configuration in which at least one of the first layer 71 and the third layer 73 is a water absorbing layer and the second layer 72 is a layer free of a water absorbent, in, for example, Fig. 12.

**In** the second mode, when the film 70 has two or more layers, it is only necessary that at least one of the two or more layers contain a gas absorbent. The gas absorbent is, for example, at least one of a sulfur-based gas absorbent, a carbon dioxide absorbent, and an oxygen absorbent. **In** the present embodiment, the second mode of the film 70 will be described by giving an example in which the gas absorbent is a sulfur-based gas absorbent. Specific examples of the laminated configuration of the film 70 according to the second mode include a laminated configuration in which the first layer 71 on the side of exterior members 21 and 22 is a sulfur-based gas absorbing layer and the second layer 72 on the electrical storage element 30 side is a layer free of a sulfur-based gas absorbent; and a laminated configuration in which the first layer 71 on the side of exterior members 21 and 22 is a layer free of a sulfur-based gas absorbing layer and the second layer 72 on the electrical storage element 30 side is a layer containing a sulfur-based gas absorbent, in, for example, Fig. 11. **In** addition, examples of the laminated configuration of the film 70 include a laminated configuration in which the first layer 71 located in the middle is a sulfur-based gas absorbing layer and the second layer 72 on the electrical storage element 30 side and the third layer 73 on the side of exterior members 21 and 22 are layers free of a sulfur-based gas absorbent; a laminated configuration in which at least one of the first layer 71 and the third layer 73 is a sulfur-based gas absorbing layer and the second layer 72 is a layer free of a sulfur-based gas absorbent; a laminated configuration in which the first layer 71 located in the middle is a layer free of a sulfur-based gas absorbing layer and the second layer 72 on the electrical storage element 30 side and the third layer 73 on the side of exterior members 21 and 22 are layers containing a sulfur-based gas absorbent; and a laminated configuration in which at least one of the first layer 71 and the third layer 73 is a layer free of a sulfur-based gas absorbing layer and the second layer 72 is a layer containing a sulfur-based gas absorbent, in, for example, Fig. 12. Since hydrogen sulfide gas is generated from the electrical storage element 30, the second layer 72 located on the electrical storage element 30 side is preferably a sulfur-based gas absorbing layer.

**In** the first mode, it is preferable that one surface or both surfaces of the film 70 have a heat-sealing property. When the film 70 according to the first mode is joined to at least one of the positive electrode layer 40, the negative electrode layer 50 and the solid electrolyte layer 60, it is preferable to enhance the heat-sealing property of the film 70. For this reason, for example, when the film 70 has three or more layers, it is preferable that the layer located at the surface (the second layer 72 and the third layer 73 in Fig. 12) contains a heat-sealable resin. From the viewpoint of suppressing deterioration of the heat-sealing property of the layer located at the surface, the layer located at the surface is preferably free of a water absorbent (in particular, an inorganic water absorbent). **In** the all-solid-state battery 10, it is preferable that the water absorbing layer is provided between layers located at the surface from the viewpoint of further suitably exhibiting the water absorbing performance of the water absorbing layer of the film 70. This is because if the all-solid-state battery 10 is located at the surface, moisture in the atmosphere is absorbed before the electrical storage device is manufactured, so that the water absorbing performance of the water absorbing layer is likely to be deteriorated. **In** the all-solid-state battery 10, it is also preferable that for the water absorbing layer, the third layer 73 located on the side of exterior members 21 and 22 is a water absorbing layer. This is because the third layer 73 is close to the exterior members 21 and 22, so that moisture entering from the side of exterior members 21 and 22 is easily absorbed. **In** the all-solid-state battery 10, it is also preferable that for the water absorbing layer, the second layer 72 located on the electrical storage element 30 side is a water absorbing layer. This is because the second layer 72 is close to the electrical storage element 30, so that moisture contained in the electrical storage element 30 is easily adsorbed.

In the second mode, it is preferable that one surface or both surfaces of the film 70 have a heat-sealing property. When the film 70 according to the second mode is joined to at least one of the positive electrode layer 40, the negative electrode layer 50 and the solid electrolyte layer 60, it is preferable to enhance the heat-sealing property of the film 70. For this reason, for example, when the film 70 has three or more layers, it is preferable that the layer located at the surface (the second layer 72 and the third layer 73 in Fig. 12) contains a heat-sealable resin. From the viewpoint of suppressing deterioration of the heat-sealing property of the layer located at the surface, the layer located at the surface is preferably free of a sulfur-based gas absorbent.

The film 70 according to the first mode may contain a sulfur-based gas absorbent described later, in addition to a water absorbent. In the present embodiment, a layer containing a sulfur-based gas absorbent is sometimes referred to as a "sulfur-based gas absorbing layer". When a sulfur-based gas absorbent is contained, the sulfur-based gas absorbent may be contained in the water absorbing layer, or may be contained in a layer free of a water absorbent. When the film 70 has two or more layers, it is preferable that the sulfur-based gas absorbent is contained in a layer free of a water absorbent and forms a sulfur-based gas absorbing layer. If a single layer contains a plurality of kinds of particles, there may be a problem that particles are hardly dispersed during formation of the film 70, so that the film is perforated, or the strength of the film 70 varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the film 70 according to the first mode has two or more layers, specific examples of the laminated configuration of the film 70 include a laminated configuration in which the first layer 71 is a water absorbing layer and the second layer 72 is a sulfur-based gas absorbing layer in, for example, Fig. 11. In addition, examples of the laminated configuration of the film 70 include a laminated configuration in which the first layer 71 is a water absorbing layer and at least one of the second layer 72 and the third layer 73 is a sulfur-based gas absorbing layer; and a laminated configuration in which at least one of the first layer 71 and the third layer 73 is a water absorbing layer and the second layer 72 is a sulfur-based gas absorbing layer, in, for example, Fig. 12. Since hydrogen sulfide gas is generated from the electrical storage element 30, the second layer 72 located on the electrical storage element 30 side is preferably a sulfur-based gas absorbing layer. Among them, the laminated configuration in which the first layer 71 located between the second layer 72 and the third layer 73 is a water absorbing layer and the second layer 72 located on the electrical storage element 30 side is a sulfur-based gas absorbing layer is most preferable because as described above, it is preferable that the water absorbing layer is provided between layers located at the surface.

The film 70 according to the second mode may contain a water absorbent described later, in addition to a sulfur-based gas absorbent. As described above, in the present embodiment, a layer containing a water absorbent is sometimes referred to as a "water absorbing layer" as described above. When a water absorbent is contained, the water absorbent may be contained in the sulfur-based gas absorbing layer, or may be contained in a layer free of a water absorbent. When the film 70 according to the second mode has two or more layers, it is preferable that the water absorbent is contained in a layer free of a sulfur-based gas absorbent and forms a water absorbing layer. If a single layer contains a plurality of kinds of particles, there may be a problem that particles are hardly dispersed during formation of the film 70, so that the film is perforated, or the strength of the film 70 varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the film 70 according to the second mode has two or more layers, specific examples of the laminated configuration of the film 70 include a laminated configuration in which the first layer 71 is a sulfur-based gas absorbing layer and the second layer 72 is a water absorbing layer in, for example, Fig. 11. **In** addition, examples of the laminated configuration of the film 70 include a laminated configuration in which the first layer 71 is a sulfur-based gas absorbing layer and at least one of the second layer 72 and the third layer 73 is a water absorbing layer; and a laminated configuration in which at least one of the first layer 71 and the third layer 73 is a sulfur-based gas absorbing layer and the second layer 72 is a water absorbing layer, in, for example, Fig. 12. **In** the all-solid-state battery 10, it is preferable that the water absorbing layer is provided between layers located at the surface from the viewpoint of further suitably exhibiting the water absorbing performance of the water absorbing layer of the film 70. This is because if the all-solid-state battery 10 is located at the surface, moisture in the atmosphere is absorbed before the electrical storage device is manufactured, so that the water absorbing performance of the water absorbing layer is likely to be deteriorated. The laminated configuration in which the first layer 71 located between the second layer 72 and the third layer 73 is a water absorbing layer described later and the second layer 72 located on the electrical storage element 30 side is a sulfur-based gas absorbing layer is most preferable. In the all-solid-state battery 10, it is also preferable that for the water absorbing layer, the third layer 73 located on the side of exterior members 21 and 22 is a water absorbing layer. This is because the third layer 73 is close to the exterior members 21 and 22, so that moisture entering from the side of exterior members 21 and 22 is easily absorbed. In the all-solid-state battery 10, it is also preferable that for the water absorbing layer, the second layer 72 located on the electrical storage element 30 side is a water absorbing layer. This is because the second layer 72 is close to the electrical storage element 30, so that moisture contained in the electrical storage element 30 is easily adsorbed.

**In** the present embodiment, the resin contained in the film 70 is not particularly limited as long as the effect of the present embodiment is not impaired, and for example, a thermoplastic resin is preferable, and a heat-sealable resin is more preferable. Specific examples of the resin include resins such as polyester, polyolefin, polyamide, epoxy resin, acrylic resin, fluororesin, polyurethane, silicone resin and phenol resin, and modified products of these resins. The resin for forming the film 70 may be a copolymer of these resins or a modified product of the copolymer. Further, a mixture of these resins may be used. Among them, heat-sealable resins such as polyester and polyolefin are preferable.

Specific examples of the polyester include polyethylene terephthalate, polybutylene terephthalate, polyethylene naphthalate, polybutylene naphthalate, polyethylene isophthalate and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of enhancing heat resistance and pressure resistance (for example, deterioration of insulation quality (due to collapse caused by heat-sealing) in sealing of the all-solid-state battery 10 element 4 with the exterior members 21 and 22).

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. These polyolefin-based resins may be used alone, or may be used in combination of two or more thereof. Among them, polypropylene is particularly preferable because it is excellent in heat-sealing property.

The film 70 preferably contains a resin containing a polyolefin backbone as a main component, more preferably contains polyolefin as a main component, still more preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesion film 70. For example, the phrase "the resin contained in the film 70 contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the film 70.

The resin contained in the film 70 preferably contains polyester as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesion film 70. For example, the phrase "the resin contained in the film 70 contains polyester as a main component" means that the content ratio of polyester is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the film 70.

In manufacturing of the film 70 of the present embodiment, a resin film formed in advance may be used as the film 70. A resin for forming the film 70 may be formed into a film by extrusion molding, coating or the like to obtain a resin formed of the resin film.

In the present embodiment, the film 70 may contain an elastomer. The elastomer serves to enhance the flexibility of the film 70 while securing the durability of the resin film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. **In** the film 70, the content of the elastomer is not particularly limited as long as the flexibility of the film 70 can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The content ratio of the resin contained in the film 70 according to the first mode is, for example, 99.9 mass% or more, preferably 99.5 mass% or more, more preferably 99.0 mass% or more.

The content ratio of the resin contained in the film 70 according to the second mode is, for example, 50 mass% or more, preferably 55 mass% or more, more preferably 60 mass% or more.

The water absorbent contained in the film 70 according to the first mode is not particularly limited as long as it exhibits a water absorbing property in a state of being dispersed in the resin film. For example, from the viewpoint of temporal stability in the all-solid-state battery 10, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-state batteries, is preferably an inorganic chemical absorbent which re-releases moisture in a high-temperature range.

In the first mode, examples of the resin contained in the water absorbing layer include resins identical to those exemplified as resins contained in the film 70.

In the first mode, the content ratio of the resin contained in the water absorbing layer of the film 70 is, for example, 50 mass% or more, preferably 55 mass% or more, more preferably 60 mass% or more.

In the first mode, the content of the water absorbent contained in the film 70 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the film 70. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the film 70 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the film 70 according to the first mode, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

As described above, the film 70 according to the first mode may contain a water absorbent described later, in addition to a sulfur-based gas absorbent. It is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more and 15 µm or less. If the number average particle diameter is below the above-described range, the sulfur-based gas absorbent is likely to aggregate, and if the number average particle diameter is above the above-described range, the sulfur-based resin film for all-solid-state batteries may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO2 to Al2O3 is 1/1 to 2,000/1.

The hydrophobic zeolite is excellent in absorbency of molecules having low polarity, such as a sulfur-based gas, and has a porous structure. In general, zeolite becomes more hydrophobic as the molar ratio of SiO₂ to Al₂O₃ increases, where SiO₂ and Al₂O₃ are constituent components of zeolite. More hydrophobic zeolite more easily absorbs molecules having low polarity, such as a sulfur-based gas, but has less affinity for molecules having high polarity, such as water, and hardly absorbs these molecules. The molar ratio of SiO₂ to Al₂O₃ of the hydrophobic zeolite is preferably 30/1 to 10,000/1, more preferably 35/1 to 9,000/1, still more preferably 40/1 to 8,500/1. Hydrophobic zeolite has high heat resistance, and thus can maintain an absorption effect even when exposed to a high temperature of 230°C or higher. In the present invention, hydrophobic zeolite having a molar ratio in the above-described range is preferably used from the viewpoint of the balance between the sulfur-based gas absorption capacity and availability.

Bentonite is an inorganic substance that contains montmorillonite, which is a clay mineral, as a main component, a large amount of layered aluminum phyllosilicate, and minerals such as quartz and feldspar as impurities. Examples of the bentonite include Na-type bentonite containing a large amount of Na⁺ ions, Ca-type bentonite containing a large amount of Ca²⁺ ions, and activated bentonite with Ca-type bentonite artificially converted into the Na-type by adding thereto several percents by weight of sodium carbonate.

Sepiolite is a clay mineral containing a hydrous magnesium silicic acid salt as a main component, and has a general chemical composition of Mg₈Si₁₂O₃₀(OH₂)₄(OH)₄·6-8H₂O, and has a porous structure. The pH (3% suspension) is preferably 8.0 to 9.0, more preferably 8.9 to 9.3 from the viewpoint of availability.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

In the first mode, the content of the sulfur-based gas absorbent in the film 70 is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 27 parts by mass or less, still more preferably 25 parts by mass or less, based on 100 parts by mass of the resin contained in the film 70. The content is preferably in the range of about 0.1 to 30 parts by mass, about 0.1 to 27 parts by mass, about 0.1 to 25 parts by mass, about 0.2 to 30 parts by mass, about 0.2 to 27 parts by mass, about 0.2 to 25 parts by mass, about 0.3 to 30 parts by mass, about 0.3 to 27 parts by mass, and about 0.3 to 25 parts by mass. The content of the sulfur-based gas absorbent contained in the sulfur-based gas absorbing layer of the film 70 is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less or 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the first mode, the content ratio of the resin contained in the sulfur-based gas absorbing layer is, for example, 50 mass% or more, preferably 55 mass% or more, more preferably 60 mass% or more.

In the first mode, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the first mode, examples of the resin contained in the sulfur-based gas absorbing layer include resins identical to those exemplified as resins contained in the water absorbing layer.

When a sulfur-based gas absorbent is contained in the film 70 according to the first mode, the sulfur-based gas absorbent may be contained in the water absorbing layer or may be contained in a layer free of a water absorbent as described above. When the sulfur-based gas absorbent is contained in the water absorbing layer, the water absorbing layer also functions as a sulfur-based gas absorbing layer.

The film 70 according to the first mode may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

The thickness of the film 70 according to the first mode is not particularly limited as long as the effect of the present disclosure is exhibited, and the thickness of the film 20 is preferably about 10 µm or more, more preferably about 15 µm or more, still more preferably about 20 µm or more, and preferably about 1,000 µm or less, more preferably about 900 µm or less, still more preferably about 500 µm or less. The thickness is preferably in the range of about 10 to 1000 µm, about 10 to 900 µm, about 10 to 500 µm, about 15 to 1000 µm, about 15 to 900 µm, about 15 to 500 µm, about 20 to 1000 µm, about 20 to 900 µm, and about 20 to 500 µm.

In the first mode, when the film 70 has two or more layers, each layer may have a thickness such that resin film 70 has the above-described thickness. For example, the thickness of the water absorbing layer is preferably about 5 µm or more, more preferably about 6 µm or more, still more preferably about 7 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 6 to 500 µm, about 6 to 400 µm, about 6 to 300 µm, about 7 to 500 µm, about 7 to 400 µm, or about 7 to 300 µm. The thickness of the sulfur-based gas absorbing layer is preferably about 5 µm or more, more preferably about 7 µm or more, still more preferably about 10 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 7 to 500 µm, about 7 to 400 µm, about 7 to 300 µm, about 10 to 500 µm, about 10 to 400 µm, or about 10 to 300 µm.

In the second mode, it is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more, 1.0 µm or more or the like, and preferably 15 µm or less, 10 µm or less, 8 µm or less or the like. The number average particle size of the powder is preferably in the range of about 0.1 to 15 µm, about 0.1 to 10 µm, about 0.1 to 8 µm, about 1 to 15 µm, about 1 to 10 µm, or about 1 to 8 µm. If the number average particle diameter is below the above-described range, the sulfur-based gas absorbent is likely to aggregate, and if the number average particle diameter is above the above-described range, the sulfur-based resin film for all-solid-state batteries may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

Specific examples of the hydrophobic zeolite, bentonite and sepiolite are as described in the first mode, and the description thereof is omitted.

### (Chemical sulfur-based gas absorbent)

The chemical sulfur-based gas absorbent is as described in the first mode, and description thereof is omitted.

Examples of the resin contained in the sulfur-based gas absorbing layer include resins identical to those exemplified as resins contained in the film 70.

In the second mode, the content of the sulfur-based gas absorbent in the film 70 is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 29 parts by mass or less, still more preferably 28 parts by mass or less, based on 100 parts by mass of the resin contained in the film 70. The content is preferably in the range of about 0.1 to 30 parts by mass, about 0.1 to 29 parts by mass, about 0.1 to 28 parts by mass, about 0.2 to 30 parts by mass, about 0.2 to 29 parts by mass, about 0.2 to 28 parts by mass, about 0.3 to 30 parts by mass, about 0.3 to 29 parts by mass, and about 0.3 to 28 parts by mass. The content of the sulfur-based gas absorbent contained in the sulfur-based gas absorbing layer of the film 70 is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the second mode, the content ratio of the resin contained in the sulfur-based gas absorbing layer is, for example, 40 mass% or more, preferably 45 mass% or more, more preferably 50 mass% or more.

In the second mode, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the second mode, the film 70 may contain a water absorbent in addition to a sulfur-based gas absorbent as described above. The water absorbent contained in the film 70 is not particularly limited as long as it exhibits a water absorbing property in a state of being dispersed in the resin film. For example, from the viewpoint of temporal stability in the all-solid-state battery 10, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-state batteries, is preferably an inorganic chemical absorbent which re-releases moisture in a high-temperature range.

In the second mode, the content of the water absorbent contained in the film 70 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the film 70. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the film 70 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the film 70 according to the second mode, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

In the second mode, examples of the resin contained in the water absorbing layer include resins identical to those exemplified as resins contained in the film 70.

In the second mode, the content ratio of the resin contained in the water absorbing layer of the film 70 is, for example, 50 mass% or more, preferably 55 mass% or more, more preferably 60 mass% or more.

When a water absorbent is contained in the film 70 according to the second mode, the water absorbent may be contained in the sulfur-based gas absorbing layer or may be contained in a layer free of a sulfur-based gas absorbent as described above. When the water absorbent is contained in the sulfur-based gas absorbing layer, the sulfur-based gas absorbing layer also functions as a water absorbing layer.

In the second mode, the film 70 may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

In the second mode, the thickness of the film 70 is not particularly limited as long as the effect of the present disclosure is exhibited, and the thickness of the film 20 is preferably about 25 µm or more, more preferably about 30 µm or more, still more preferably about 40 µm or more, and preferably about 250 µm or less, more preferably about 240 µm or less, still more preferably about 230 µm or less. The thickness is preferably in the range of about 25 to 250 µm, about 25 to 240 µm, about 25 to 230 µm, about 30 to 250 µm, about 30 to 240 µm, about 30 to 230 µm, about 40 to 250 µm, about 40 to 240 µm, or about 40 to 230 µm.

In the second mode, when the film 70 has two or more layers, each layer may have a thickness such that resin film 70 has the above-described thickness. For example, the thickness of the sulfur-based gas absorbing layer is preferably about 10 µm or more, more preferably about 15 µm or more, still more preferably about 20 µm or more, and for example, about 100 µm or less, preferably about 95 µm or less, more preferably about 90 µm or less, still more preferably about 85 µm or less. The thickness is preferably in the range of about 10 to 100 µm, about 10 to 95 µm, about 10 to 90 µm, about 10 to 85 µm, about 15 to 100 µm, about 15 to 95 µm, about 15 to 90 µm, about 15 to 85 µm, about 20 to 100 µm, about 20 to 95 µm, about 20 to 90 µm, or about 20 to 85 µm. The thickness of the water absorbing layer is preferably about 5 µm or more, more preferably about 6 µm or more, still more preferably about 7 µm or more, and preferably about 60 µm or less, more preferably about 55 µm or less, still more preferably about 50 µm or less. The thickness is preferably in the range of about 5 to 60 µm, about 5 to 55 µm, about 5 to 50 µm, about 6 to 60 µm, about 6 to 55 µm, about 6 to 50 µm, about 7 to 60 µm, about 7 to 55 µm, or about 7 to 50 µm.

### (Method for manufacturing film 70)

In the present embodiment, the method for manufacturing the film 70 is not particularly limited as long as the film 70 is obtained, and a known or conventional film formation method and lamination method may be applied. The film 70 can be manufactured by, for example, a known film formation method and/or lamination method such as an extrusion method, a coextrusion method, a cast molding method, a T-die method, a cutting method or an inflation method. When the film 70 has two or more layers, for example, films for forming the layers, which are produced in advance, may be laminated with an adhesive agent layer interposed therebetween, a molten resin composition may be laminated by extrusion or co-extrusion on a layer formed in advance, a plurality of layers may be laminated by melting and press-bonding while being produced in parallel, or one or more resins may be applied onto another layer, and dried to perform coating.

In the first mode, a layer forming the film 70, such as a water absorbing layer (sulfur-based gas absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

In the first mode, for example, when a water absorbing layer or the like is laminated by an extrusion coating method, first, a resin composition for forming the layer such as a water absorbing layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer such as a water absorbing layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K7210.

In the first mode, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the second mode, a layer forming the film 70, such as a sulfur-based gas absorbing layer (water absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a sulfur-based gas absorbing layer (or a water absorbing layer), which is formed in advance, may be laminated and bonded with an adhesive layer laminated by an extrusion coating method, a dry lamination method, a non-solvent lamination method or the like. Subsequently, aging treatment may be performed if necessary.

In the second mode, for example, when a sulfur-based gas absorbing layer or the like is laminated by an extrusion coating method, first, a resin composition for forming the layer such as a sulfur-based gas absorbing layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer such as a sulfur-based gas absorbing layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K7210.

In the second mode, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the present embodiment, desired surface treatment can be applied to the surface of each layer between the layers forming the film 70 in advance if necessary for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

**In** the present embodiment, each layer forming the film 70 can be further uniaxially stretched or biaxially stretched by a heretofore known method using a tenter method, a tubular method or the like if necessary.

### <3. Action and effect of all-solid-state battery>

The all-solid-state battery 10 includes the film 70. The film 70 contains a water absorbent. Therefore, water vapor that has entered the outer packaging 20 and moisture present in the outer packaging 20 can be absorbed. Therefore, it is possible to suppress generation of a gas such as hydrogen sulfide due to contact between the solid electrolyte 40A, 50A or 60A contained in an element forming the all-solid-state battery 10 and water vapor (moisture).

The film 70 contains a sulfur-based gas absorbent. Therefore, for example, it is possible to absorb hydrogen sulfide generated due to contact between the solid electrolyte 40A, 50A or 60A contained in an element forming the all-solid-state battery 10 and water vapor (moisture). Therefore, it is possible to suppress an excessive increase in the internal pressure of the outer packaging 20.

### <4. Modifications>

The above-described embodiment is an example of possible forms of an all-solid-state battery according to the present invention, and is not intended to limit the form thereof. The all-solid-state battery according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below.

<4-1>
In the embodiment, the film 70 of the second mode may contain at least one of a carbon dioxide absorbent and an oxygen absorbent as the gas absorbent.

<4-2>
In the example of the embodiment which is shown in Fig. 3, the film 70 may be disposed so as to be in contact with at least one of the solid electrolyte 50A of the negative electrode layer 50 and the solid electrolyte 60A of the solid electrolyte layer 60.

<4-3>
In the embodiment, the area of the positive electrode current collector 41 is smaller than the area of the negative electrode current collector 51 in plan view, and the area of the positive active material layers 42 and 43 in plan view is smaller than the area of the negative active material layers 52 and 53 in plan view, but these magnitude relationships may be reversed. That is, the area of the positive electrode current collector 41 may be larger than the area of the negative electrode current collector 51 in plan view, and the area of the positive active material layers 42 and 43 in plan view may be larger than the area of the negative active material layers 52 and 53 in plan view. In this modification, the film 70 is preferably disposed along at least a part of the outer contour of the negative electrode layer 50 such that the film 70 is in contact with the negative electrode layer 50.

<4-4>
In the embodiment, the configuration of the outer packaging 20 can be arbitrarily changed. The outer packaging 20 may be formed by, for example, winding one exterior member 21 around the electrical storage element 30 such that an opening is formed.

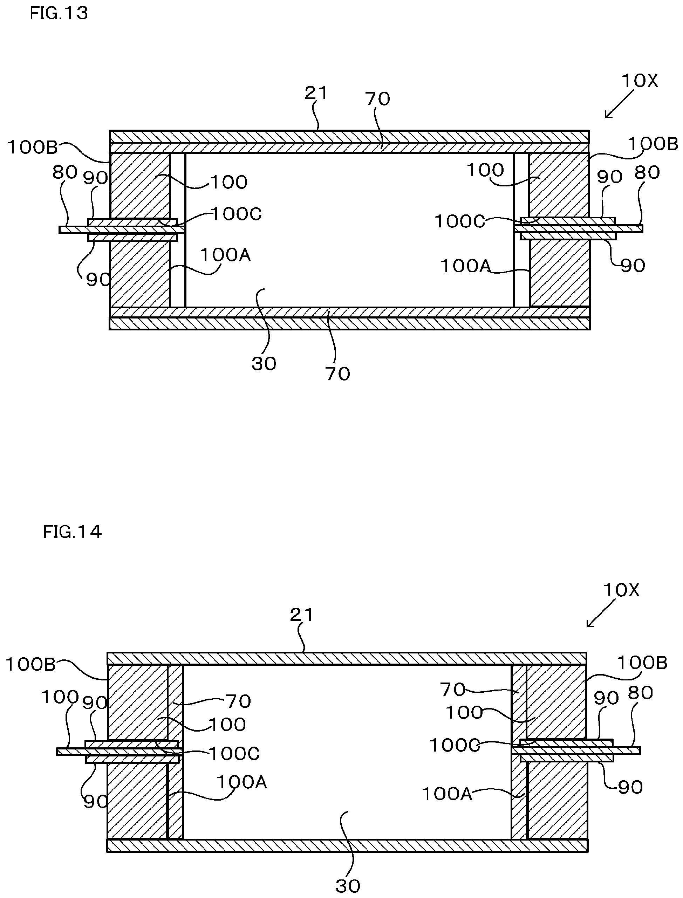

Figs. 13 to 15 shows a sectional view of an all-solid-state battery 10X of a modification. In the all-solid-state battery 10X, one exterior member 21 is wound around the electrical storage element 30 such that an opening is formed, and a lid 100 is disposed so as to close the opening. It is preferable that the lateral surface of the lid 100 and the exterior member 21 are joined by, for example, heat sealing.

The lid 100 may be a metal molded article having an arbitrary shape, or a resin molded article having an arbitrary shape. When the lid 100 is a metal molded article or a resin molded article, the material for forming the lid 100 is preferably thick enough to suppress deformation of the outer packaging 20 even if the all-solid-state batteries 10X are stacked on top of another. The minimum value of the thickness of the material for forming the lid 100 is, for example, 1.0 mm, more preferably 3 mm, still more preferably 4 mm. The maximum value of the thickness of the material for forming the lid 100 is, for example, 10 mm, more preferably 8.0 mm, still more preferably 7.0 mm. The maximum value of the thickness of the material for forming the lid 100 may be 10 mm or more. The thickness of the material for forming the lid 100 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, when the lid 100 is described as a metal molded article or a resin molded article, the material for forming the lid 100 does not include a film. The film is, for example, a film defined by Japanese Industrial Standard (JIS), Packaging Terminology Standard. The film defined by JIS, Packaging Terminology Standard is a plastic film having a thickness of less than 250 µm. The thickness of the material for forming the lid 100 may vary depending on a portion of the lid 100. When the thickness of the material for forming the lid 100 varies depending on a portion of the lid 100, the thickness of the material for forming the lid 100 is defined as a thickness of the thickest portion of the lid 100.

The lid 100 may have, for example, a plate shape. When the lid 100 has a plate shape, the lid 100 is preferably thick enough to suppress deformation of the outer packaging 20 even if the all-solid-state batteries 10X are stacked on top of another. From another point of view, when the lid 100 has a plate shape, the lateral surface of the lid 100 is preferably thick enough to ensure that the lateral surface of the lid 100 and the exterior member 21 can be suitably heat-sealed. The minimum value of the thickness of the lid 100 is, for example, 1.0 mm, more preferably 3 mm, still more preferably 4 mm. The maximum value of the thickness of the lid 100 is, for example, 10 mm, more preferably 8.0 mm, still more preferably 7.0 mm. The maximum value of the thickness of the lid 100 may be 10 mm or more. The thickness of the material for forming the lid 100 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, when the lid 100 is described as having a plate shape, the material for forming the lid 100 does not include a film defined by Japanese Industrial Standard (JIS), Packaging Terminology Standard. The thickness of the lid 100 may vary depending on a portion of the lid 100. When the thickness of the lid 100 varies depending on a portion, the thickness of the thickest portion of the lid 100 is defined as a thickness of the lid 100.

The lid 100 includes a first surface 100A facing the electrical storage element 30 and a second surface 100B on a side opposite to the first surface 100A. A hole 100C bored through the first surface 100A and the second surface 100B is formed at the center of the lid 100.

In the example shown in Fig. 13, the film 70 is disposed between the exterior member 21 and the electrical storage element 30 so as to cover substantially the entire upper surface and lower surface of the electrical storage element 30. The film 70 is in contact with at least a part of the solid electrolytes 40A, 50A and 60A contained in an element forming the electrical storage element 30. The film 70 and the inner surface (heat-sealable resin layer 23C) of the exterior member 21 may, or are not required to, be joined. At least a part of the film 70 may be disposed between the exterior member 21 and the lid 100.

In the example shown in Fig. 14, the film 70 is disposed between the lid 100 and the electrical storage element 30 so as to cover substantially the entire lateral surface of the electrical storage element 30. The film 70 is in contact with at least a part of the solid electrolytes 40A, 50A and 60A contained in an element forming the electrical storage element 30. The film 70 and the first surface 100A of the lid 100 may, or are not required to, be joined. The film 70 and the first surface 100A of the lid 100 may be in contact with each other, or may be separate from each other. The film 70 may be disposed between the exterior member 21 and the electrical storage element 30 so as to cover substantially the entire electrical storage element 30. The film 70 and the inner surface (heat-sealable resin layer 23C) of the exterior member 21 may, or are not required to, be joined.

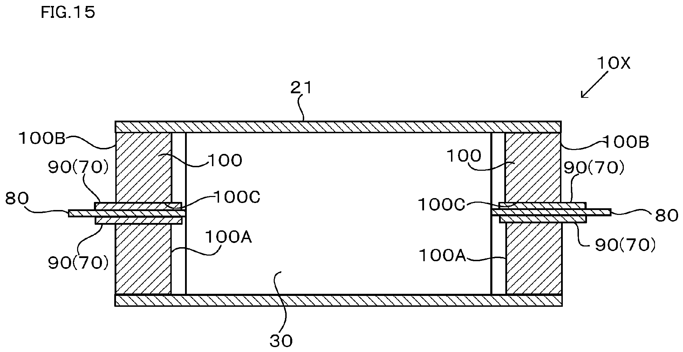

In the example shown in Fig. 15, the film 70 is used as the adhesion film 90 for terminal. The film 70 is in contact with at least a part of the solid electrolytes 40A, 50A and 60A contained in an element forming the electrical storage element 30. The film 70 is preferably disposed at least in a hole 100C of the lid 100. The film 70 may be exposed from the 100C of the lid 100. In the all-solid-state battery 10X including the lid 100, moisture may enter from the hole 100C of the lid 100. In the all-solid-state battery 10X including the film 70 of the first mode, moisture can be inhibited from reaching the electrical storage element 30 with the film 70 absorbing and holding moisture entering from the hole 100C of lid 100 because the film 70 contains a water absorbent. In the all-solid-state battery 10X including the film 70 of the second mode, a gas generated from the electrical storage element 30, such as hydrogen sulfide, can be absorbed by the film 70 because the film 70 contains a gas absorbent. Therefore, a gas such as hydrogen sulfide is hardly released to the outside through the hole 100C of the lid 100.

### <5. Examples>

The inventors of the present application manufactured all-solid-state batteries of Examples 1 to 3 and Comparative Examples 1 and 2, and conducted tests for confirming whether a short circuit between the positive electrode layer and the negative electrode layer occurred or not and whether the housing expanded or not. **In** the following description, among the elements forming the all-solid-state batteries of examples and comparative examples, elements that are identical to those in the embodiment may be given the same symbols as in the embodiment for illustration purpose.

### <5-0. Manufacturing and testing methods for resin film for all-solid-state batteries>

The inventors of the present application manufactured the film 70 used for the all-solid-state batteries of Examples 1 to 3, by the following procedure. The inventors of the present application prepared a master batch with moisture absorbent powder dispersed in polypropylene using a twin-screw kneading and extruding machine, and manufactured a film 70 using an inflation extruder whose cylinder rotation speed and take-up speed were adjusted so that the film had an arbitrary thickness.

The manufactured film 70 was cut into a 3 cm-square frame shape (width: 5 mm), a 2 cm-square solid electrolyte layer 60 and the film 70 were placed on a 3 cm-square negative electrode layer 50, a 2.5 cm-square positive electrode layer 40 was laminated thereon, and the deburring press was then performed on the entire film on the upper and lower sides at a pressure of 100 MPa. Conditions of the deburring pressing are normal temperature, normal humidity, and a press holding time of 10 minutes. Next, current passage between the positive electrode layer 40 and the negative electrode layer 50 was confirmed with a multimeter. The multimeter used in the present test is 3154 DIGITAL MΩ HiTESTER manufactured by HIOKI E.E. CORPORATION. When the resistance value measured by the multimeter was 2,000 MΩ or less, it was determined that there was no current passage between the positive electrode layer 40 and the negative electrode layer 50.

Next, an electrical storage element 30 was wrapped in 6 cm-square exterior members 21 and 22, and the four sides of the exterior members 21 and 22 were heat-sealed with a 7 mm seal bar such that the residual ratio of the heat-sealable resin layer 23C was 70%, and cutting was then performed so that the seal width was 2 mm, thereby obtaining a 5 cm-square outer packaging 20 in which the electrical storage element 30 was housed. The outer packaging 20 in which the electrical storage element 30 was housed was left standing for 100 hours in an environment at a temperature of 85°C and a humidity of 85%, followed by confirmation of whether or not the outer packaging 20 expanded due to generation of gas. In the present test, the film 70 was used which had been left standing in a vacuum oven (-50 MPa) for 24 hours for drying before the test (before placement).

### <5-1. Example 1>

The all-solid-state battery of Example 1 is the all-solid-state battery 10 of the embodiment. In the all-solid-state battery of Example 1, the film 70 is disposed as shown in Fig. 3. The film 70 includes a first layer 71, a second layer 72 and a third layer 73 shown in Fig. 12. The specifications of the film 70 are as follows.

- The material for forming the first layer 71 is polypropylene containing a moisture absorbent. The absorbed moisture concentration of the first layer 71 is 20 wt%. The thickness of the first layer 71 is 30 µm.
- The material for forming the second layer 72 is polypropylene. The thickness of the second layer 72 is 10 µm.
- The material for forming the third layer 73 is polypropylene. The thickness of the third layer 73 is 10 µm.
- The overall absorbed moisture concentration of the film 70 used for the all-solid-state battery 10 of Example 1 is 12 wt%.

### <5-2. Example 2>

The all-solid-state battery of Example 2 is the all-solid-state battery 10 of the embodiment. **In** the all-solid-state battery of Example 2, the film 70 is disposed as shown in Fig. 3. The film 70 is a single layer shown in Fig. 3. The specifications of the film 70 are as follows.

- The material for forming the film 70 is polypropylene containing a moisture absorbent. The absorbed moisture concentration of the film 70 is 12 wt %.
- The thickness of the film 70 is 50 µm.

### <5-3. Example 3>

The all-solid-state battery of Example 3 is the all-solid-state battery 10 of the embodiment. **In** the all-solid-state battery of Example 3, the film 70 is disposed as shown in Fig. 3. The film 70 is a single layer shown in Fig. 3. The specifications of the film 70 are as follows.

- The material for forming the film 70 is polypropylene containing a moisture absorbent. The absorbed moisture concentration of the film 70 is 24 wt %.
- The thickness of the film 70 is 100 µm.

### <5-4. Comparative Example 1>

The all-solid-state battery of Comparative Example 1 differs from the all-solid-state battery 10 of the embodiment in that it does not include the film 70. Except for the above, the all-solid-state battery of Comparative Example 1 is identical in configuration to all-solid-state battery 10 of the embodiment.

### <5-5. Comparative Example 2>

The all-solid-state battery of Comparative Example 2 differs from the all-solid-state battery 10 of the embodiment in that it includes a polypropylene film instead of the film 70. Except for the above, the all-solid-state battery of Comparative Example 2 is identical in configuration to all-solid-state battery 10 of the embodiment. **In** the all-solid-state battery of Comparative Example 2, a polypropylene film is disposed at a location identical to that of the film 70 of Fig. 3. The thickness of the polypropylene film is 50 µm.

### <5-6. Test results>

**In** the all-solid-state batteries of Examples 1 to 3, there was no current passage between the positive electrode layer 40 and the negative electrode layer 50. This is considered to be because the all-solid-state batteries of Examples 1 to 3, in which the film 70 is disposed between the positive electrode layer 40 and the negative electrode layer 50, thus avoided breakage of the outer peripheral end part of the negative electrode layer 50 when pressed, so that a short circuit did not occur.

In the all-solid-state batteries of Examples 1 to 3, the outer packaging 20 did not expand. This is considered to be because that the all-solid-state batteries of Examples 1 to 3, which include the film 70, thus avoided contact between water vapor and the solid electrolyte with the film 70 absorbing water vapor entering from the outside of the outer packaging 20, or underwent contact between a very small amount of water vapor and the solid electrolyte.

In the all-solid-state batteries of Comparative Example 1, there was current passage between the positive electrode layer 40 and the negative electrode layer 50. This is considered to be because the all-solid-state battery of Comparative Example 1, in which a film is not present between the positive electrode layer 40 and the negative electrode layer 50, thus suffered from breakage of the outer peripheral end part of the negative electrode layer 50 when pressed, so that a short circuit occurred.

In the all-solid-state battery of Comparative Example 1, the outer packaging 20 expanded. This is considered to be because the all-solid-state battery of Comparative Example 1, which does not include the film 70, thus underwent contact between water vapor entering from the outside of the outer packaging 20 and the solid electrolyte, so that a gas such as hydrogen sulfide was generated.

In the all-solid-state battery of Comparative Example 2, there was no current passage between the positive electrode layer 40 and the negative electrode layer 50. This is considered to be because the all-solid-state battery of Comparative Example 2, in which a polypropylene film is disposed between the positive electrode layer 40 and the negative electrode layer 50, thus avoided breakage of the outer peripheral end part of the negative electrode layer 50 when pressed, so that a short circuit did not occur.

In the all-solid-state battery of Comparative Example 2, the outer packaging 20 expanded. This is considered to be because, since the polypropylene film has no gas absorbing property, the all-solid-state battery of Comparative Example 2 underwent contact between water vapor entering from the outside of the outer packaging 20 and the solid electrolyte, so that a gas such as hydrogen sulfide was generated.

### [6. Supplemental items]

The first mode of the film 70 of each of the present embodiment includes items shown below.

Item 1A. A resin film for all-solid-state batteries which is disposed so as to be in contact with a solid electrolyte contained in an element forming an electrical storage element of an all-solid-state battery, and at least a part of the solid electrolyte, in which the resin film for all-solid-state batteries contains a water absorbent.

Item 2A. The resin film for all-solid-state batteries according to item 1A, in which the water absorbent is an inorganic water absorbent.

Item 3A. The resin film for all-solid-state batteries according to item 1A or 2A, in which the inorganic water absorbent is at least one selected from the group consisting of calcium oxide, anhydrous magnesium sulfate, magnesium oxide, calcium chloride, zeolite, aluminum oxide, silica gel, alumina gel, and dried alum.

Item 4A. The resin film for all-solid-state batteries according to any one of items 1A to 3A, in which a content of the water absorbent is 0.1 parts by mass or more based on 100 parts by mass of the resin contained in the resin film for all-solid-state batteries.

Item 5A. The resin film for all-solid-state batteries according to any one of items 1A to 4A, including two or more layers.

Item 6A. The resin film for all-solid-state batteries according to item 5A, in which among the two or more layers, at least one layer contains the water absorbent, and at least one layer contains a sulfur-based gas absorbent.

Item 7A. The resin film for all-solid-state batteries according to any one of items 1A to 6A, in which the layer of the resin film for all-solid-state batteries, which contains the water absorbent, contains 0.5 masses or more of the absorbent based on 100 parts by mass of the resin.

Item 8A. The resin film for all-solid-state batteries according to any one of items 1A to 7A, including a heat-sealable resin.

Item 9A. The resin film for all-solid-state batteries according to item 8A, in which the heat-sealable resin contains at least one selected from the group consisting of polyester and polyolefin.

The second mode of the film 70 of each of the present embodiment includes items shown below.

Item 1B. A resin film for all-solid-state batteries which is disposed so as to be in contact with a solid electrolyte contained in an element forming an electrical storage element of an all-solid-state battery, and at least a part of the solid electrolyte, in which the resin film for all-solid-state batteries contains a sulfur-based gas absorbent.

Item 2B. The resin film for all-solid-state batteries according to item 1B, in which a content of the sulfur-based gas absorbent is 0.1 parts by mass or more based on 100 parts by mass of the resin contained in the resin film for all-solid-state batteries.

Item 3B. The resin film for all-solid-state batteries according to item 1B or 2B, in which the sulfur-based gas absorbent has a maximum particle size of 20 µm or less and a number average particle size of 0.1 µm or more and 15 µm or less.

Item 4B. The resin film for all-solid-state batteries according to any one of items 1B to 3B, in which the sulfur-based gas absorbent contains at least one selected from the group consisting of a chemical sulfur-based gas absorbent and a physical sulfur-based gas absorbent.

Item 5B. The resin film for all-solid-state batteries according to item 4B, in which the physical sulfur-based gas absorbent contains at least one selected from the group consisting of hydrophobic zeolite, bentonite and sepiolite in which a molar ratio of SiO₂ to Al₂O₃ is 1/1 to 2000/1.

Item 6B. The resin film for all-solid-state batteries according to item 4B or 5B, in which the chemical sulfur-based gas absorbent is a metal oxide, or an inorganic substance carrying or containing a metal or metal ions.

Item 7B. The resin film for all-solid-state batteries according to item 6B, in which the metal oxide contains at least one selected from the group consisting of CuO, ZnO and AgO.

Item 8B. The resin film for all-solid-state batteries according to item 6B or 7B, in which the metal species in the inorganic substance carrying or containing a metal or metal ions is at least one selected from the group consisting of Ca, Mg, Na, Cu, Zn, Ag, Pt, Au, Fe, Al and Ni.

Item 9B. The resin film for all-solid-state batteries according to any one of items 1B to 8B, in which the layer of the resin film for all-solid-state batteries, which contains the sulfur-based gas absorbent, contains 5 masses or more of the sulfur-based gas absorbent based on 100 parts by mass of the resin.

Item 10B. The resin film for all-solid-state batteries according to any one of items 1B to 9B, including a heat-sealable resin.

Item 11B. The resin film for all-solid-state batteries according to item 10B, in which the heat-sealable resin contains at least one selected from the group consisting of polyester and polyolefin.

### Reference Signs List

10 All-solid-state battery
23C Barrier layer
40A, 50A, 60A Solid electrolyte
40 Positive electrode layer
50 Negative electrode layer
60 Solid electrolyte layer
70 Resin film for all-solid-state batteries

## Claims

1. An all-solid-state battery comprising:
an electrical storage element including a solid electrolyte; and
a resin film for all-solid-state batteries which is disposed so as to be in contact with at least a part of the solid electrolyte, wherein
the resin film for all-solid-state batteries contains at least one of a water absorbent and a gas absorbent.

2. The all-solid-state battery according to claim 1, comprising a solid electrolyte layer including the solid electrolyte, wherein
the resin film for all-solid-state batteries is disposed so as to be in contact with at least the solid electrolyte layer.

3. The all-solid-state battery according to claim 1 or 2, comprising a positive electrode layer including the solid electrolyte, wherein
the resin film for all-solid-state batteries is disposed so as to be in contact with at least the positive electrode layer.

4. The all-solid-state battery according to claim 1 or 2, comprising a negative electrode layer including the solid electrolyte, wherein
the resin film for all-solid-state batteries is disposed so as to be in contact with at least the negative electrode layer.

5. The all-solid-state battery according to claim 1 or 2, wherein the resin film for all-solid-state batteries is in a shape of a frame surrounding the solid electrolyte.

6. The all-solid-state battery according to claim 1 or 2, comprising an outer packaging that seals the electrical storage element, wherein
the outer packaging includes a film-shaped exterior member including a barrier layer, and
the resin film for all-solid-state batteries is disposed on at least a part of a region inside the barrier layer.

7. The all-solid-state battery according to claim 1 or 2, wherein
the resin film for all-solid-state batteries contains a sulfur-based gas absorbent, and
the sulfur-based gas absorbent contains at least one selected from the group consisting of a chemical sulfur-based gas absorbent and a physical sulfur-based gas absorbent.

8. The all-solid-state battery according to claim 7, wherein the chemical sulfur-based gas absorbent is a metal oxide, or an inorganic substance carrying or containing a metal or metal ions.
